# EUROPÄISCHE PATENTSCHRIFT

(11) **EP 0 541 483 B1**
(45) Veröffentlichungstag und Bekanntmachung des Hinweises auf die Patenterteilung: **14.08.1996**
(21) Anmeldenummer: 92810812.5
(22) Anmeldetag: 22.10.1992
(51) Int. Cl.: D01H 13/32

(54) **Prozess-Steuerung im Textilbetrieb**
Process control in the textile field
Conduite de processus pour l'industrie textile

(30) Priorität: 08.11.1991 CH 3272/91
(43) Veröffentlichungstag der Anmeldung: 12.05.1993
(60) Teilanmeldung: 96100630.1
(73) Patentinhaber: MASCHINENFABRIK RIETER AG, CH-8406 Winterthur (CH)
(72) Erfinder: Meyer, Urs, Dr., CH-8172 Niederglatt (CH); Meyer, Urs Andreas, CH-8153 Rümlang (CH); Biber, Heinz, CH-8356 Ettenhausen (CH)

(56) Entgegenhaltungen:
- EP-A- 0 365 901
- EP-A- 0 389 849
- WO-A-90/04059
- WO-A-91/16481
- DE-A- 3 433 682
- PATENT ABSTRACTS OF JAPAN vol. 013, no. 553 (C-663)8. Dezember 1989 & JP-A-12 29 823 ( MURATA MACH LTD ) 13 September 1989
- MELLIAND TEXTILBERICHTE Bd. 68, November 1987, HEIDELBERG DE Seiten 809 - 814 G]NTER WILMS 'Integration und Vernetzungsm glichkeiten in der textilen Fertigung durch CIM'
- MELLIAND TEXTILBERICHTE Bd. 73, Nr. 3, M rz 1992, HEIDELBERG DE Seiten 299 - 302 KARSTEN SIMON 'Standard-Datennetzwerk für die Textilindustrie'
- TEXTIL PRAXIS INTERNATIONAL Oktober 1990, LEINFELDEN DE Seiten 1013 - 1028 TREBBI 'Vergleich von Anforderungsprofil und Realität für eine automatisierte Spinnerei'
- MELLIAND TEXTILBERICHTE November 1987, HEIDELBERG DE Seite 825 SCHERZBERG 'Datenschnittstellen an Textilmaschinen'

## Beschreibung

Die Erfindung bezieht sich auf Prozess-Steuerungs-Systeme insbesondere für Spinnereien.

### Stand der Technik

Die Idee der computergesteuerten Spinnerei schwebt seit mindestens zwanzig Jahren vor den Augen der Fachwelt - siehe zum Beispiel: US 3922642; BE 771277; BE 779591.

Die Anstrengungen in dieser Richtung haben sich in den letzten Jahren vervielfacht - zum Beispiel: DE-OS 3906508; US-PS 4563873; US-PS 4665686 und EP-PS 0410429.

Als Zwischenstufe auf dem Weg zum Prozessleitsystem erschien seit 1980 die Prozessdatenerfassung, die zum Beispiel im Artikel "Die Prozessdatenerfassung als Führungsinstrument" von W.Kistler im "Textil praxis international" vom Mai 1984 beschrieben wurde. Die Weiterentwicklung der Prozessdatenerfassung kann dann durch die folgenden Artikel verfolgt werden:
i) "Mikroelektronik - heutige und zukünftige Einsatzgebiete in Spinnereibetrieben" von Marcel Zünd in "Melliand Textilberichte", Juni 1985,
ii) Zellweger Uster: Conedata 100 for Quality and Productiviy in Winding" in Textile World, vom April 1986,
iii)"A Quality Analysis System for OE based on an absolute detector" von Dan Claeys, im Canadian Textile Journal vom Mai 1986, wo das "Downloading" von Einstellungen für Garnreiniger vorgesehen ist.

Das Reutlinger Spinnerei-Kolloquium vom Dezember 1986 wurde der Informationsverarbeitung gewidmet und allgemeine Ueberlegungen für die Anwendung vom Prozessleitsystem in der Spinnerei wurden vorgelegt z.B. im Artikel "Integration der Information im Textilbetrieb - Ueberlegungen zum textilen CIM" (Dr. T. Fischer).

Anforderungen an ein Informationssystem sind dann im Artikel "Integrierte Informationsverarbeitung als Instrument der Unternehmungsführung" in Melliand Textilberichte, 11/1987, Seite 805 bis 808, aufgeführt worden und Ansätze für moderne Lösungen sind im Artikel "Integration und Vernetzungsmöglichkeiten in der textilen Fertigung durch CIM" auf den Seiten 809 bis 814 der gleichen Zeitschrift zu finden.

Als Stand der Technik im Januar 1991 kann das BARCO CIM System aufgeführt werden. Dieses System ist in der Veröffentlichung "CIM in Spinning" der Fa. Barco Automation Inc. Charlotte, NC, USA dargelegt worden. Es sieht eine "Dateneinheit" (Maschinenterminal) pro Maschine vor, wobei der Prozessleitrechner (die Zentrale) mit den Dateneinheiten der Maschinen Signale austauscht. Die Dateneinheit (mit ihren Anzeigen) dient auch als Bedienerunterstützung. Obwohl die vorerwähnte Veröffentlichung die bidirektionale Kommunikation erwähnt, ist das System offensichtlich primär noch auf die Datenerfassung auf der Maschine und Weiterleitung an die Zentrale eingerichtet. Eine Verbindung mit der Maschinensteuerung ist weder gezeigt noch angedeutet. Solche Dateneinheiten lassen sich in einem einzigen Netzwerk integrieren, was die System-Architektur vereinfacht - allenfalls auf Kosten der System-Flexibilität und der Reaktionsgeschwindigkeit. Ausserdem, da keine echte zentrale Steuerung vorgesehen ist, wird nichts unternommen, um die mit dem Netzwerk verbundenen Maschine vor den Auswirkungen eines Netzwerkdefektes bzw. Ausfalls zu schützen. Eine Weiterentwicklung dieses Systems ist im Artikel "Fadenbruchdetektor für Ringspinnmaschinen" in Melliand Textilberichte vom September 1991 (ITMA Ausgabe) aufgeführt.

Prozessleitsysteme gehören heute in gewissen Industrien zum lang eingeführten Stand der Technik. Es fragt sich, wieso diese "bekannten Prinzipien" nicht ohne weiteres im Textilbetrieb realisieren lassen sondern nur mühsam, schrittweise zur Anwendung kommen. Die Antwort liegt zum Teil in der Tatsache, dass ein Prozessleitsystem nur schwer einen Maschinenkomplex (wie z.B. einen Spinnereibetrieb) "auferlegt" werden kann. Prozessleitsysteme lassen sich relativ leicht einführen, wo die Informatik und die Prozesstechnologie gleichzeitig entwickelt werden. Dies ist z.B. im Bereich der Chemiefaseraufbereitung (Filamentspinnerei) eher der Fall, so dass schon in Dornbirn Konferenz des Jahres 1981 die Einführung von Prozessleitsystemen in die Filamentspinnerei vorgesehen werden konnten (Vortrag von K. Ibounig - "Wandel der Prozessleittechnik durch die Mikroelektronik").

Die Technologie der Kurz- und Langstapelfaserspinnereien bzw. die Gestaltung der Maschinen dieser Spinnereien lassen sich nicht schnell ändern. Die Informatik muss sich hier an einen langsameren Entwicklungsgang des Prozesses selber anpassen. Ein realisierbarer Vorschlag für ein Prozessleitsystem in einem Spinnereibetrieb muss die Gegebenheiten des Spinnereibetriebes berücksichtigen.

### Konzeptuelle Aspekte der Erfindung

Grundsätzlich kann man zwei bisherige Ansatzpunkte für die Konzeption einer vernetzten Prozess-Informatik-Lösung unterscheiden:
- Das Ausweiten der Produktionsplanung und -steuerung in die Produktionslinie hinein bis zur einzelnen Prozessstufe und Maschine, gleichbedeutend mit einer Einführung der Informatik von oben nach unten.
- Das Ausgestalten der Qualitätsüberwachung mit Einbezug der Materialflussüberwachung zu einer vollen Prozessüberwachung. Dieses Vorgehen entspricht einer Weiterentwicklung der bekannten Systeme zur Betriebsdaten- und Qualitätserfassung.

Dieser Erfindung liegt ein drittes Konzept zugrunde, nämlich der Einführung neuer Spinnereimaschinen mit steuerbaren Eigenschaften für den Betrieb mit geschlossenem Regelkreis. Dazu gehört auch die Störungsbehebung durch Bedienungsroboter (Normalfall) und Bedienungspersonal (Ausnahmefall, Instandsetzung). Dieses Konzept bedeutet die Umstellung auf eine eigentliche Prozessregelung. Sie setzt einen hohen Grad der Automatisierung und Prozessüberwachung voraus.

Das Konzept an und für sich ist nicht neu - Ansätze dafür findet man im Stand der Technik, der in dieser Anmeldung erwähnt ist, insbesondere in der gattungsbildenden Schrift WO-A-9 116 481. Das Konzept ist aber bislang in der Spinnerei nicht konzequent durchgesetzt worden.

### Die Erfindung

Die Erfindung sieht eine Spinnereianlage mit einem Prozessleitrechner für mindestens eine Maschinengruppe vor, wobei jeder Maschine der Gruppe mit einer eigenen Steuerung versehen ist, welche die Aktorik der Maschine steuert. Es ist mindestens ein Netzwerk für die bidirektionale Kommunikation zwischen dem Rechner und jeder Maschine der Gruppe vorgesehen.

Die Aufgabe der Erfindung liegt darin, das Bedienungspersonal bei der Suche nach den Ursachen von Leistungsänderungen der Maschine zu unterstützen.

Diese Aufgabe wird durch die Merkmale einer Anlage nach Anspruch 1 gelöst.

Ausführungen gemäss der Erfindung werden nachfolgend anhand der Figuren der Zeichnungen näher erläutert. Es zeigt:
- Fig. 1: ein Layout-Diagramm einer Spinnerei bis zum Spinnen (ohne Umspulen),
- Fig. 2: schematisch die Vernetzung von Maschinen, Bedienungsrobotern und Transportsystemen,
- Fig. 3: die "Architektur" eines Systems nach Fig. 2,
- Fig. 4: einen schematischen Querschnitt durch eine Ringspinnmaschine mit einigen Hilfsgeräten,
- Fig. 5 und 6: (schematisch) verschiedene graphische Darstellungen von wichtigen Beziehungen, die mittels eines Systems nach dieser Erfindung zur Verfügung gestellt werden können, und
- Fig. 7: (schematisch) die sogenannte Drehzahlkurve der Ringspinnmaschine

Die Problematik der Prozessführung (ob automatisch oder durch menschliche Bedienung) in der Spinnerei liegt zum Teil in der "Aufsplitterung" des Materialflusses zwischen dem Eingang in der Prozesslinie und der Uebergabe an die Garnlager bzw. an die Weiterverarbeitung in der Weberei oder Strickerei. Dies soll nachfolgend verdeutlicht werden, bevor die Anwendung der Prinzipien nach dieser Erfindung erläutert wird. Die hier aufgeführte Anlage ist konventionell und schon in PCT Patentanmeldung Nr. PCT/CH/91/00140 gezeigt worden; sie dient bloss als Beispiel.

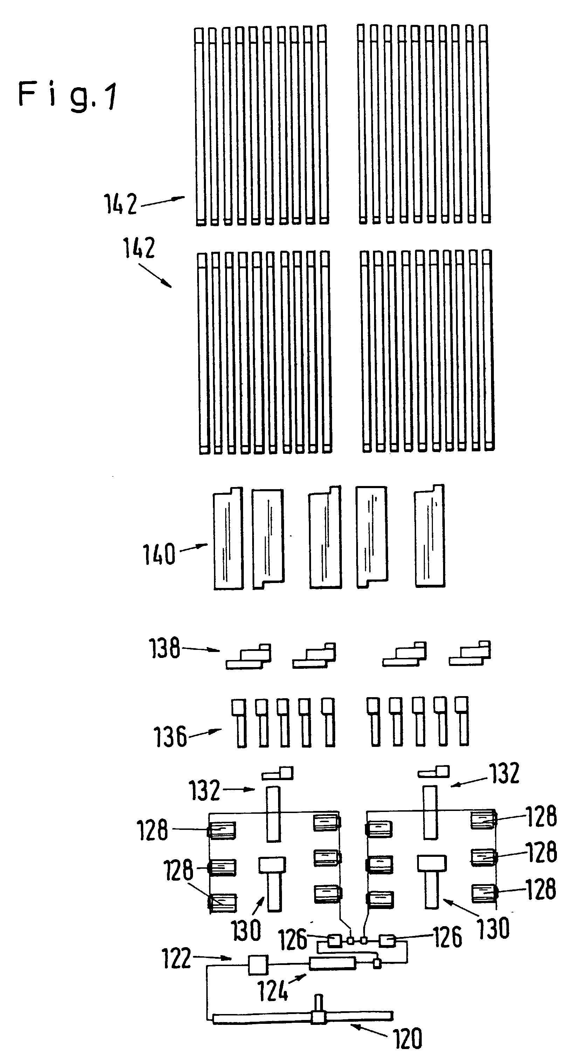

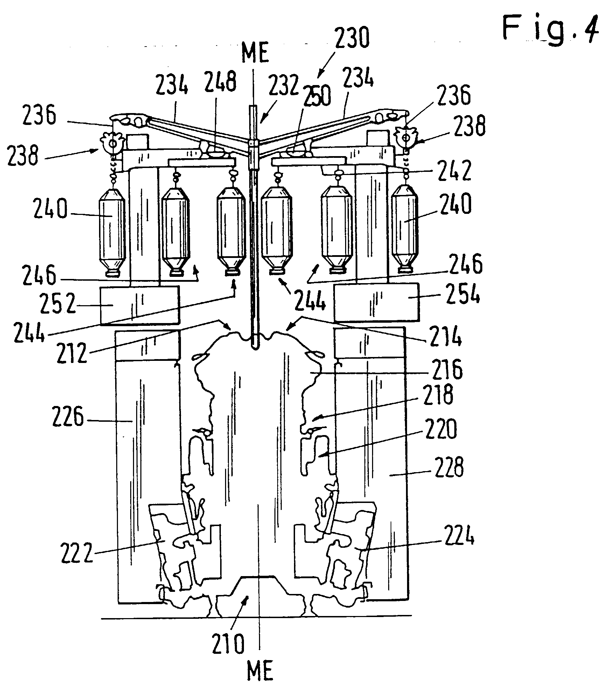

Die in Fig. 1 dargestellte Spinnerei umfasst einen Ballenöffner 120, eine Grobreinigungsmaschine 122, eine Mischmaschine 124, zwei Feinreinigungsmaschinen 126, zwölf Karden 128, zwei Strecken 130 (erste Streckenpassage), zwei Kämmereivorbereitungs-Maschinen 132, zehn Kämmaschinen 136, vier Strecken 138 (zweite Streckenpassage), fünf Flyer 140 und vierzig Ringspinnmaschinen 142. Jede Ringspinnmaschine 142 umfasst eine grosse Anzahl Spinnstellen (bis zu ca. 1200 Spinnstellen pro Maschine). Dies wird nachfolgend näher in Zusammenhang mit Fig. 4 erklärt.

Fig. 1 zeigt eine heute konventionelle Anordnung zur Herstellung von einem sogenannten gekämmten Ringgarn. Das Ringspinnverfahren kann durch ein neueres Spinnverfahren (z.B. das Rotorspinnen) ersetzt werden, wobei die Flyer dann überflüssig werden. Da aber die Prinzipien dieser Erfindung unabhängig von der Art der Endspinnstufe anwendbar sind, reicht die Erklärung in Zusammenhang mit dem konventionellen Ringspinnen auch für die Anwendung der Erfindung in Zusammenhang mit neuen Spinnverfahren. Nicht gezeigt in Fig. 1 ist die Spulerei, die für neue Spinnverfahren (z.B. Rotorspinnen) ohnehin wegfällt.

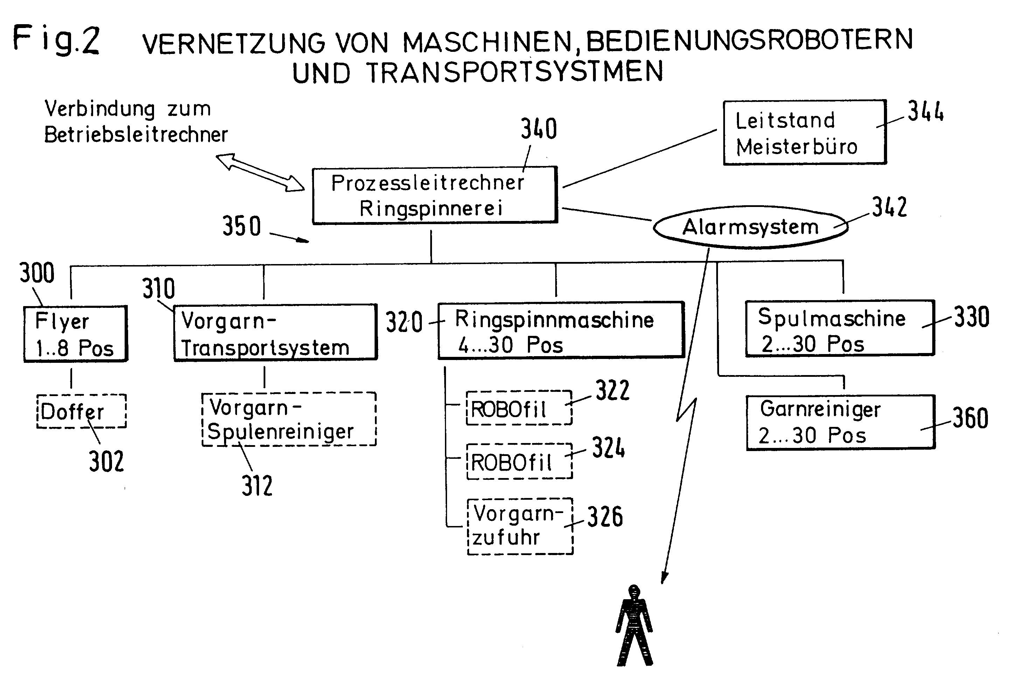

Eine praktische Ausführung des Bereiches "Ringspinnerei" für eine automatisierte Anlage ist in Fig. 2 gezeigt, allerdings immer noch schematisch, um die Informatik-Aspekte des Systems darzustellen. Der dargestellte Anlageteil umfasst (in der Reihenfolge der Prozessstufen, d.h. der "Verkettung" der Maschinen):
a) die Flyerstufe 300,
b) eine Endspinnstufe 320, in diesem Fall durch Ringspinnmaschinen gebildet,
c) ein Vorgarntransportsystem 310, um Flyerspulen von der Flyerstufe 300 an die Endspinnstufe 320 und leere Hülsen von der Endspinnstufe 320 zurück an die Flyerstufe 300 zu tragen, und
d) eine Umspulstufe 330, um die an den Ringspinnmaschinen gebildeten Kopse in grösseren (zylindrischen oder konischen) Packungen umzuwandeln.

Jede Verarbeitungsstufe 300, 320, 330 umfasst eine Mehrzahl von Hauptarbeitseinheiten (Maschinen), die je mit einer eigenen Steuerung versehen sind. Diese Steuerung ist in Fig. 2 nicht gezeigt, wird aber nachfolgend in Zusammenhang mit anderen Figuren etwas näher erläutert. An der jeweiligen Maschinensteuerung angehängt, sind Robotikeinheiten (Bedienungsautomaten), die dieser Maschine direkt zugeteilt werden, wobei die folgenden Beispiele in Fig. 2 angedeutet sind:
- "Flyerdoffen" (Kasten 302)
- "Spinnstellenbedienung" (Kasten 322, 324 - ein Kasten pro Spinnstellenreihe)
- "Vorgarnzufuhr" (Kasten 326).

Das Vorgarntransportsystem 310 ist auch mit einer eigenen Steuerung versehen, die hier nicht näher erläutert werden soll. Das System 310 umfasst eine Einheit 312 zum Reinigen von Vorgarnspulen, bevor sie an die Flyerstufe 300 zurückgegeben werden. Die Ringspinnmaschinen der Stufe 320 und Spulmaschinen der Stufe 330 bilden zusammen einen "Maschinenverbund", wodurch der Transport der Kopse an die Spulmaschinen gewährleistet ist. Die Steuerung dieses Verbundes erfolgt von der Spulmaschine aus.

Ein Netz 350 ist vorgesehen, wodurch alle Maschinen der Stufen 300, 320, 330 und das System 310 für den Signalaustausch (Datenübermittlung) mit einem Prozessleitrechner 340 verbunden sind. Der Rechner 340 bedient direkt ein Alarmsystem 342 und eine Bedienung 344 z.B. in einer Leitstelle bzw. in einem Meisterbüro. Eine sehr wichtige Funktion des Umspulens von Ringspinngarn ist die sogenannte Garnreinigung, die mit dem Kasten 360 angedeutet ist. Der Garnreiniger ist über dem Netz 350 mit dem Prozessleitrechner 340 verbunden. Durch diese Vorrichtung werden Garndefekte eliminiert und gleichzeitig Informationen (Daten) gewonnen, die Rückschlüsse auf die vorangehenden Verfahrensstufen ermöglichen. Die Garnreinigungsfunktion wird an der Spulmaschine ausgeübt.

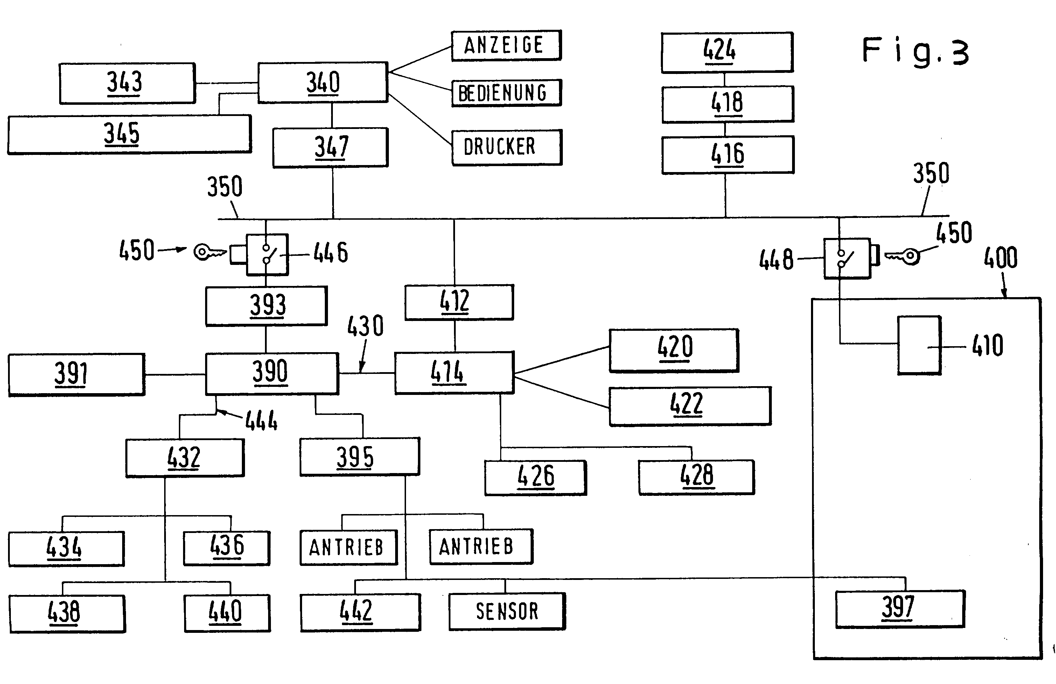

Fig. 3 zeigt eine mögliche Variante der Architektur für eine Prozess-Steuerung nach Fig. 2, wobei dieser Beispiel gemäss unserer vorangehenden Anmeldung WO 92/13121 (Fig. 19) gebildet ist. Fig. 3 zeigt nochmals den Leitrechner 340 und das Netzwerk 350 zusammen mit einem Rechner 390 einer Maschinensteuerung der Anlage. Jeder Rechner 340, 390 hat ihm zugeordnete Speicher 343, 345 bzw. 391 und Treiber, wovon Beispiele mit den Bezugszeichen 347, 393, 395 angedeutet sind. Weitere Treiber (nicht angedeutet) bestimmen die notwendigen Schnittstellen für die Kommunikation der Rechner 340, 390 mit ihren jeweiligen Bedienungsoberflächen, hier als Anzeige, Bedienung und Drucker für den Rechner 340 angedeutet. Der Treiber 347 bestimmt die Schnittstelle zwischen dem Leitrechner 340 und dem Netzwerk 350 und der Treiber 393 die Schnittstelle zwischen dem Netzwerk 350 und der Maschinensteuerung 390.

Der Treiber 395 bestimmt die Schnittstellen zwischen der Maschinensteuerung 390 und den dadurch gesteuerten Antriebe, die mit den Kasten "ANTRIEB" angedeutet sind. Ein weiterer Treiber (nicht angedeutet) bestimmt die Schnittstelle zwischen der Maschinensteuerung 390 und den ihr zugeordneten Sensorik, hier mit den Bezugszeichen 442 bzw. "SENSOR" angedeutet. Es kann ein einziges Netzwerk 350 (gezeigt) oder eine Mehrzahl von Netzwerken (nicht gezeigt) zur Anwendung kommen können.

Fig. 3 zeigt auch einen weiteren Treiber 410, der als Schnittstelle zwischen dem Netzwerk 350 und der Steuerung einer weiteren Maschine 400 dient. Diese Maschine 400 ist mit derjenigen Maschine verkettet, die durch den Rechner 390 gesteuert wird, z.B. wenn die letztgenannte Maschine eine Mischmaschine ist, kann die Maschine 400 ein Ballenöffner oder eine Kardenspeisung sein. Dem Sensoriktreiber der vom Rechner 390 gesteuerte Maschine ist auch ein zusätzlicher Sensor 397 angehängt, welcher nicht in der "eigenen" Maschine, sondern in der nächsten Maschine 400 der "Kette" vorgesehen ist und der Zustand dieser Maschine 400 der "eigenen" Maschinensteuerung (dem Rechner 390) mitteilt. Es kann offensichtlich mehrere solche zusätzliche Sensoren in den anderen oder in verschiedenen anderen Maschinen der Kette vorgesehen werden.

Den einzelnen Maschinensteuerungen welche zu einem autonomen Betrieb der Anlage völlig ausreichen, werden nach dieser Erfindung ein Prozessleitrechner überlagert, um eine Prozessleitebene zu bilden, die imstande ist, Daten zu berücksichtigen, die nicht unbedingt für eine einzelne Maschinensteuerung selbst von Bedeutung sind. Zusätzliche Treiber 412, 416 bestimmen daher die notwendigen Schnittstellen für die Kommunikation zwischen zwei Zusatzrechnern 414 bzw. 418 und dem Netzwerk 350. Beide Zusatzrechner 414,418 sind mit Treibern (nicht gezeigt) versehen, welche die Schnittstellen zwischen dem jeweiligen Rechner 414,418 und Anzeige und Bedienungselemente, wovon nur die mit dem Rechner 414 verbundene Anzeige 420 und Bedienung 422 gezeigt sind.

Der Rechner 418 steuert eine Klimaanlage, welche den Saal klimatisiert, worin sich die durch die Rechner 390 und 410 gesteuerten Maschinen (unter anderem) befinden. Diese Anlage hat natürlich mit den Prozessabläufen an und für sich nichts unmittelbar zu tun, beeinflusst aber massgebend die Umgebung, worin diese Abläufe abgewickelt werden müssen und dementsprechend die erzielten Resultate dieser Abläufe. Ueber die Bedeutung der Kommunikation des Prozessleitrechners 340 mit dem Steuerungsrechner der Klimaanlage wird nachfolgend näher eingegangen. Die Klimaanlage ist auf jeden Fall mit einer Sensorik versehen, die in Fig. 3 schematisch durch einen Sensor 424 vertreten wird.

Der Rechner 414 steuert ein Datenerfassungssystem, welches der durch den Rechner 390 gesteuerten Maschine angebaut ist. Das Datenerfassungssystem umfasst eine Sensorik die in Fig. 3 durch die Sensoren 426 und 428 vertreten ist. Die Sensorik des Erfassungssystems gewinnt Messdaten über Zustände in der vom Rechner 390 gesteuerten Maschine, liefert aber die entsprechenden Ausgangssignale (Rohdaten) nicht an den Rechner 390, sondern an den Rechner 414. Dieser kann (muss aber nicht) eine Verbindung 430 mit dem Rechner 390 aufweisen, die nachfolgend näher erläutert wird, liefert die gewonnenen Rohdaten trotzdem über das Netzwerk 350 an den Rechner 340.

Der Prozessleitrechner 340 kann nun Steuerbefehle über das Netzwerk 350 an den Rechner 390 und/oder an den Rechner 414 senden. Wenn solche Steuerbefehle vom Rechner 414 empfangen werden und das Datenerfassungssystem betreffen, ist keine Kommunikation über die Verbindung 430 notwendig. Wenn solche Befehle aber die Aktorik der Maschine selbst betreffen, müssen sie über die Verbindung 430 an die Maschinensteuerung 390 weitergeleitet werden, falls sie vom Rechner 414 empfangen werden. Diese Anordnung ist nicht wünschenswert, da der Prozessleitrechner 340 vorzugsweise direkt mit dem Rechner 390 kommuniziert. Die Anordnung ist aber nicht aus der Erfindung ausgeschlossen und könnte sich als notwendig erweisen, falls die "Mitarbeit" des Datenerfassungssystems notwendig ist, um die aus seinen Daten gewonnenen Resultate in Steuerbefehle für die Maschine umzuwandeln. Dies könnte z.B. der Fall sein, wo das Datenerfassungssystem (vielleicht als eine Nachrüstung) von einem Lieferant zur Verfügung gestellt wird, der die Maschine selbst nicht liefert.

Fig. 3 zeigt auch ein weiterer Rechner 432, welcher dem Rechner 390 untergeordnet ist. Rechner 432 steuert z.B. ein Bedienungsgerät, welches der vom Rechner 390 gesteuerten Maschine ständig zugeordnet ist. Der Rechner 432 kann nicht direkt, sondern nur über den Rechner 390 mit dem Prozessleitrechner 340 kommunizieren. Der Rechner 432 erhält Steuerbefehle vom Rechner 390 und arbeitet sonst als autonome Einheit. Er steuert eigene Antriebe 434,436 und hat eigene Sensoren 438,440. Der Sensor 438 ist zur Ueberwachung eines Betriebszustandes der autonomen Einheit (des Bedienungsgerätes) vorgesehen - der Sensor 440 hingegen überwacht einen Zustand der vom Rechner 390 gesteuerten Maschine. Die Rohdaten des Sensors 440 werden dementsprechend kontinuierlich oder intermittierend an den Rechner 390 weitergeleitet.

Ein in der Maschine vorgesehenen Sensor 442 könnte zur Ueberwachung eines Zustandes der autonomen Einheit vorgesehen werden. Seine Rohdaten müssten nicht an den Rechner 432 weitergeleitet werden, würden aber die an ihn gerichteten Steuerbefehle beeinflussen.

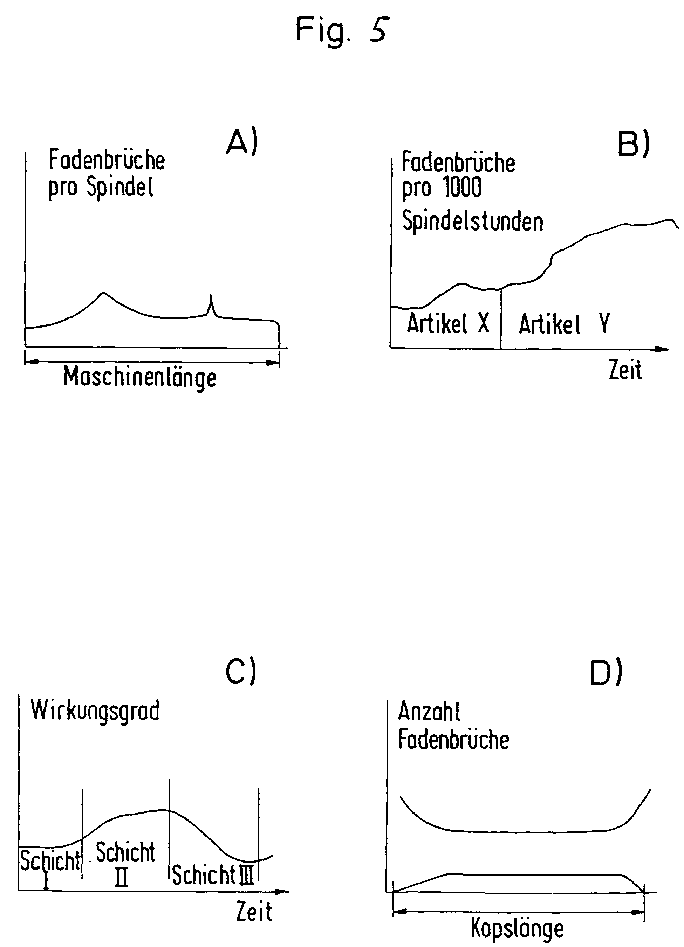

Die Verbindung 444 zwischen den Rechnern 390 und 432 muss nicht kontinuierlich bestehen. Eine geeignete Verbindung zwischen der Steuerung einer Ringspinnmaschine und einem dieser Maschinen untergeordneten Ansetzroboters ist in EP-A-534897 gezeigt. Der Rechner 432 kann (wie die Rechner 390 und 414) mit eigenen Anzeige- bzw. Bedienungselementen versehen werden, die aber in Fig. 5 nicht gezeigt sind.

Es ist gelegentlich wichtig bzw. erwünscht, eine Maschine vom Prozessleitsystem abzukoppeln. Das ist in Fig. 3 schematisch durch die "Schalter" 446,448 angedeutet, wobei nicht "frei", sondern nur unter vorgegebenen Umständen abgekoppelt werden kann, was schematisch durch die Schlüssel 450 angedeutet ist. Diese Darstellung gilt nur zur Erklärung des Prinzipes - es ist nicht notwendig, die Verbindung mit dem Netzwerk zu unterbrechen, um die Abkoppelung zu bewirken. Das Abkoppeln wie sie auch immer bewirkt wird, darf nur unter kontrollierten Umständen (durch bestimmte Personen) durchgeführt werden.

Eine vom Prozessleitrechner abgekoppelte Maschine untersteht wieder der vollen Kontrolle der Bedienungspersonals. Es können dann z.B. Wartungsarbeiten oder Versuche (unabhängig vom geleiteten System) durchgeführt werden.

Das Abkoppeln einer Maschine muss
- an den Prozessleitrechner gemeldet werden,
- derart ausgeführt werden, dass die mit der abgekoppelten Maschine verketteten Maschine(n) weiterhin vom Prozessleitrechner geleitet werden können.

### Die Ringspinnmaschine

Die Ringspinnmaschine dient in dieser Anmeldung als Beispiel einer "Längsteilmaschine". Andere Längsteilmaschinen sind Flyer, die Spinnmaschinen für die neuen Spinnverfahren (Rotorspinnmaschinen, Düsenspinnmaschinen), Spulmaschinen, Zwirnmaschinen (z.B. Doppeldrahtzwirnmaschinen) und Falschdrahttexturiermaschinen zur Verarbeitung von Endlosfilamenten.

Die allgemeinen Prinzipien einer modernen Ringspinnanlage sind im Artikel "Die automatisierte Ringspinnmaschine" von F. Dinkelmann enthalten, das am Reutlinger Spinnerei Kolloquium 2/3 Dezember 1986 vorgetragen wurde.

Die Maschine nach Fig. 4 umfasst ein doppelseitiges Gestell 210 mit zwei Spinnstellenreihen 212 bzw. 214, die spiegelbildlich zu einer Mittelebenen ME der Maschine angeordnet sind. In einer modernen Maschine enthält jede solche Spinnstellenreihe 212, 214 zwischen 500 und 600 dicht aneinandergereihte Spinnstellen. Jede Spinnstelle umfasst ein Streckwerk 216, Fadenführungselemente 218 und eine kopsbildende Einheit 220. Die Einheit 220 enthält einzelne Arbeitselemente, wie z.B. Spindel, Ring und Läufer, die aber für diese Erfindung keine Rolle spielen und nicht einzeln gezeigt sind. Diese Elemente sind dem Fachmann bekannt und sind z.B. aus EP-A 382943 ersichtlich. Für jede Spinnstellenreihe 212 bzw. 214 ist ein Doffautomat 222, 224 vorgesehen, welcher alle Spinnstellen der ihm zugeordneten Spinnstellenreihe gleichzeitig bedient. Dieser Automat wird hier auch nicht näher beschrieben, wobei Einzelheiten aus EP-A 303877 gefunden werden können.

Jede Spinnstellenreihe 212 bzw. 214 ist auch mindestens einem Bedienungsgerät 226 bzw. 228 zugeordnet, welches der jeweiligen Reihe entlang fahrbar ist und Bedienungsoperationen an den einzelnen Spinnstellen ausführen kann. Einzelheiten eines solchen Bedienungsgerätes sind z.B. aus EP-A 388938 zu entnehmen.

Das Gestell 210 trägt ein Gatter 230, das aus senkrechten Stangen 232 und Querträgern 234 gebildet ist. Schienen 236 sind an den äusseren Enden der Querträger 234 montiert und erstrecken sich in Längsrichtung der Maschine. Jede Schiene 236 dient als eine Führungsbahn für einen Trolleyzug 238, der neue Spulen 240 an das Gatter 230 heranführt. Einzelheiten eines solchen Trolleyzuges sind aus EP-43 12 68 zu entnehmen.

Das Gatter 230 umfasst auch Träger 242 für Vorlagespulen 244, 246, welche die einzelnen Spinnstellen mit Vorgarn beliefern. Die Träger 242 sind als Querschienen gezeichnet, wobei aber diese Anordnung für diese Erfindung ohne Bedeutung ist. Im Beispiel nach Fig. 4 sind die Vorlagespulen für jede Spinnstellenreihe 212 bzw. 214 in zwei Reihen angeordnet, und zwar in einer inneren Reihe 244 in der Nähe der Mittelebene ME und einer äusseren Reihe 246, welche von der Mittelebene ME entfernt ist. Für jede Spinnstellenreihe 212 bzw. 214 bildet eine Spule der inneren Reihe 244 und eine benachbarte Spule der äusseren Reihe 246 ein Vorlagespulenpaar, welches ein jeweiliges Paar von benachbarten Spinnstellen mit Vorgarn beliefert. Der Teil eines Gatters, welcher ein Vorlagespulenpaar enthält, kann als "Gatterstelle" bezeichnet werden.

Die Querträger 234 tragen auch auf jeder Maschinenseite eine Schienenanordnung 248 bzw. 250, welche als Führungsbahn für einen jeweiligen fahrbaren Roboter 252 bzw. 254 dient. Der Roboter 252 bzw. 254 läuft daher zwischen der äusseren Vorlagespulenreihe 246 und den vom Trolleyzug 238 getragenen neuen Spulen 240 und oberhalb des jeweiligen Bedienungsgerätes 226 bzw. 228. Der Roboter 252 ist zur Bedienung der beiden Vorlagespulenreihen des Gatters ausgelegt, wie in unserer PCT Patentanmeldung Nr. PCT/CH/91/00225 erklärt wurde. Dieser Roboter ist für das Luntenhandling derart ausgelegt, dass nach einem Spulenwechsel im Gatter die Lunte der neuen Spule durch den Roboter ins Streckwerk eingefädelt wird.

### Die Aktorik der (Ring-) Spinnmaschine

Die Aktorik der Maschine umfasst sowohl die ein- wie auch die angebauten Elemente und Aggregate. Die Aktorik für die eingebauten Elemente umfasst mindestens Antriebe für die Spindeln, die Streckwerke und Ringbank. Ein modern konzipiertes System (Einzelantrieb) zum Antreiben der Spindeln, Ringbank und Streckwerke einer Ringspinnmaschine ist in EP 349831 und 392255 gezeigt, wonach für jede Spindel und auch für einzelne Streckwerkreihen je ein eigener Antriebsmotor vorgesehen ist. Das heute noch am meisten gebrauchte Antriebssystem (Zentralantrieb) für die Ringspinnmaschine umfasst einen Hauptmotor im Antriebskopf der Maschine und Uebertragungsmittel (z.B. Längswellen, Riemen bzw. Zahnräder), um die Antriebskräfte vom Hauptmotor auf die Antriebselemente zu übertragen.

In einer Maschine nach Fig. 4 muss auf jeden Fall je ein Zusatzmotor für die Doffvorrichtungen 222,224 vorgesehen werden. Die Aktorik für die eingebauten Elemente umfasst auch die Antriebe der Transporteinrichtungen für Kopse (z.B. nach DOS 3610838) oder für Leerhülsen in der Aufsteckung (z.B. nach WO 90/12133).

Die angebauten Hilfsaggregate umfassen natürlich sowohl die Roboter 226,228 und 252,254 als auch Transporttrolleys 238, die vorläufig an der Maschine positioniert sind. Weitere Beispiele solcher Aggregate sind Reinigungsroboter, Bläser oder andere fahrbare Automaten z.B. für den Läuferwechsel.

Einige dieser Aggregate haben eigenen Antriebe (fahrbare Bedienungsautomaten). Andere haben möglicherweise keinen eigenen Antrieb sondern sind von einem der Maschine an- bzw. eingebauten Antrieb abhängig (siehe z.B. den Trolleyantrieb gemäss Fig. 16 bis 18 von WO 90/12133) bzw. einem Antrieb nach der europäischen Patentanmeldung Nr. 42 11 77. Die Antriebe dieser Hilfsaggregate sind auch als die Aktorik der Spinnmaschine zu betrachten, sofern sie von der Maschinensteuerung beeinflussbar sind.

Wichtige Aktorikelemente sind diejenigen, welche zum "Stilllegen" einer Spinnstelle dienen, wobei "Stillegen" hier "als effektiv produzierende Spinnstelle stillegen" zu verstehen ist. In den meisten Fällen werden nämlich beim Stillegen einer einzelnen Spinnstelle nicht alle Arbeitselemente dieser Spinnstelle zum Stillstand gebracht, sondern das Spinnen wird in dieser Spinnstelle unterbrochen. Dies kann zum Beispiel durch Abbrechen der Materialzufuhr und/oder durch das absichtliche Erzeugen eines Fadenbruches geschehen.

In einer weitgehend automatisierten Maschine (z.B. der Rotorspinnmaschine) kann dies problemlos von einer zentralen Maschinensteuerung aus durch die eine oder die andere Möglichkeit bewerkstelligt werden. Es kann z.B. der Antrieb an die Speisewalze unterbrochen werden, um die Materialzufuhr an die Auflösewalze bzw. den Rotor der Spinnstelle zu unterbinden. Es kann aber auch ein sogenannter Qualitätsschnitt in der Qualitätsüberwachung der Spinnstelle bzw. Spulstelle durchgeführt werden, um den Fadenlauf zu unterbrechen. In der Rotorspinnmaschine oder Düsenspinnmaschine kann ein solcher "Schnitt" durch die absichtliche Unterbrechung des Zufuhrmaterials verursacht werden.

In der heutigen konventionellen Ringspinnmaschine sind solche Möglichkeiten nicht vorhanden, da die Aktorik der einzelnen Spinnstellen nicht unter der direkten Kontrolle der zentralen Maschinensteuerung steht. In solchen Maschinen kann aber die Stillegung einer Spinnstelle durch ein fahrbares Hilfsaggregat bewerkstelligt werden, z.B. nach EP-A-528003, d.h. durch die Betätigung einer Luntenklemme, um die Materialzufuhr zu unterbinden. Beispiele solcher Luntenklemmen sind in EP 322636 und EP 353575 zu finden.

### Die Steuerung der Spinnmaschine und ihre Hilfsaggregate

Die heute konventionelle Ringspinnmaschine (mit Zentralantrieb) hat normalerweise eine zentrale Mikroprozessorsteuerung, die geeignete Steuersignale für das Zentralantriebssystem (normalerweise durch Ansteuerung von Frequenzumrichter) erzeugt. Ein Einzelantriebssystem kann z.B. eine "verteilte" Steuerung nach EPO 389849 umfassen. Neuartige Spinnmaschinen (Rotor- bzw. Luftspinnmaschinen) sind auf jeden Fall mit verteilten Steuerungen versehen - siehe z.B. EP 295406 oder den Artikel "Mikroelektronik - heutige und zukünftige Einsatzgebiete in Spinnereibetrieben" in Melliand Textilberichte 6/1985, Seite 401 bis 407, wobei die verteilten Steuerungen sinnvollerweise eine zentrale koordinierende Maschinensteuerungszentrale umfassen.

Die fahrbaren Hilfsaggregate haben je eine eigene autonome Steuerung - siehe z.B. EP 295406, EP 394671 oder EP 394708 (Obj. 2083). Obwohl diese Steuerungen autonom arbeiten, ist jede der Maschinensteuerung hierarchisch unterstellt. Bei einem bevorstehenden Doffvorgang z.B. werden die Roboter 226,228 durch die koordinierende Maschinensteuerung aus den Arbeitsbereichen der Doffautomaten 222,224 wegbefohlen (z.B. gemäss DOS 2455495).

### Die Sensorik der heutigen (Ring-) Spinnmaschine

Im Vergleich zu den Maschinen für die neuen Spinnverfahren (z.B. Rotor-bzw. Düsenspinnmaschinen) ist die Sensorik der heutigen Ringspinnmaschine ausgesprochen dürftig. Die Rotorspinnmaschine z.B. ist schon lang mit einer Sensorik versehen, welche sowohl den Zustand der einzelnen Spinnstelle als auch die Qualität des darin hergestellten Garnes wiedergibt (siehe EP 156153 und den darin erwähnten Stand der Technik. Für eine moderne Ueberwachung - siehe ITB Garnherstellung 1/91, Seite 23 bis 32.4). Aehnliche Systeme sind auch für die Filamentverarbeitung in der Falschdralltexturiermaschine entwickelt worden - siehe z.B. DOS 3005746. Die Spulmaschine, welche die Kopse der Ringspinnmaschine zu Kreuzspulen verarbeitet, ist heute bereits mit einer hochgezüchteten Sensorik versehen - siehe z.B. DOS 3928831, EP 365901, EP 415222 und US 4984749.

Es sind Vorschläge bekannt, wonach die Ringspinnmaschine ebenfalls mit einem hochentwickelten internen Kommunikationssystem und einer entsprechenden Sensorik zu versehen wäre - siehe z.B. EP 322698 und EP 389849 (= DOS 3910181). Solche Vorschläge erfordern (für ihre Realisierung) die Ueberarbeitung der gesamten Ringspinnmaschine, was wegen der damit verbundenen Kosten - und den entsprechenden Auswirkungen auf die Wettbewerbsfähigkeit des Verfahrens - nicht schlagartig sondern nur schrittweise vor sich gehen kann.

In der nächsten Zukunft wird die Ringspinnmaschine wohl deswegen kein internes Kommunikationssystem erhalten. Informationen über die Zustände der einzelnen Spinnstellen werden deswegen nicht aus einzelnen Sensoren an den jeweiligen Spinnstellen sondern durch fahrbare Ueberwachungsgeräte gesammelt werden müssen. Solche Geräte sind schon lange bekannt (z.B. aus DOS 2731019) - eine neuere Variante, wonach die Ueberwachung in einem Fadenbruchbehebungsautomat integriert wird, ist in EP 394671 (= DOS 3909746) gezeigt worden. Weitere Sensoren der Ringspinnmaschine, welche für die Beschickung der Aufsteckung wichtig sind, kann man beispielsweise aus WO 90/12133 entnehmen. Weitere Sensoren sind für den Betrieb der Kops- bzw. Leerhülsen-Transporteinrichtung notwendig, wobei solche Sensoren heute bekannt sind und deswegen hier nicht im Detail beschrieben werden.

Es ist zu bemerken, dass die Sensorik der Spinnmaschine angebaut statt eingebaut werden kann. Ein Beispiel eines solchen Systems ist im Artikel "Ueberwachung der Qualität von OE-Rotorgarnen" in ITB Garnherstellung 1/91, Seite 23 bis 32 zu finden.

Gleichgültig ob die Spinnmaschine mit einer an- oder eingebauter Sensorik versehen ist, wird sie mit mindestens gewissen Sensorikelementen ausgerüstet werden, die ihre Ausgangssignale an die Maschinensteuerung liefern. Diese "maschineneigenen" Signale ergeben ein Abbild des "Zustandes" der Maschine. Sie beantworten unter anderem Fragen, die für die "Sicherheit" wichtig sind, z.B.
- steht bzw. bewegt sich ein fahrbares Gerät momentan in einem Bereich, wo eine Kollision mit einem anderen Maschinenteil (z.B. einem eingebauten Doffautomat) entstehen könnte?
- steht eine Person bzw. ein Hindernis in der Fahrbahn eines bewegbaren Teiles?
- ist in der Maschine eine Operation gestartet worden, die nicht sofort abgebrochen werden darf?

Die entsprechenden Sensoren können als die Sicherheitssensorik der entsprechenden Maschine bezeichnet werden. Die Sensoren dürfen dabei auf einer Nachbarmaschine oder einem Transportsystem installiert sein. Wichtig ist, dass die Sensorensignale an die zutreffende Maschinensteuerung geleitet werden.

### Maschinengerechte/Leitsystemgerechte Sensorik

Die heutige Sensorik der Textilmaschinen (z.B. der Spinnmaschinen, wie schon beschrieben) steht in enger Beziehung zur Aktorik und zur Steuerung der Maschine selbst. Die minimale Anzahl Sensoren wird verwendet, d.h. nur diejenigen Sensoren sind vorgesehen, die zum Steuern der Arbeitsabläufe der Maschine wesentlich sind. Diese Situation kommt aus folgenden Gründen zustande:
1. Jeder Sensor ist eine potentielle Fehlerquelle (diese Tatsache ist wohl bekannt, so dass Massnahmen zur Ueberwindung gelegentlicher Defekte getroffen werden müssen - siehe z.B. DOS 3939789 und EP 432401).
2. Zuverlässige Sensoren sind teuer. Massnahmen zur Ueberwachung ihrer Zuverlässigkeit sind aufwendig. Unterhaltsarbeiten verursachen zusätzliche Betriebskosten.
3. Die Folgekosten eines Sensorendefektes beschränken sich nicht auf die Ersatzteilkosten. Produktionsausfälle sind mögliche Auswirkungen eines Sensorausfalls. Unter Umständen noch schlimmer: minderwertige Produkte ("Ausschuss") kann von einem nicht mehr zuverlässigen, aber noch nicht ausgefallenen Sensor, verursacht werden.

Die Prozessdatenerfassung, die in der Einleitung erwähnt wurde, erfordert oft zusätzliche Sensoren, die meistens an der Maschine angebaut werden. Sie sind für den Maschinenablauf ohne Bedeutung und müssen deswegen zur Maschinensteuerung keine besondere Beziehung aufweisen. Wie schon angedeutet, kann dies zu Schwierigkeiten bei der Realisierung eines Prozessleitsystems führen, wo anhand der durch die Sensorik gewonnenen Daten die Prozesszentrale nicht bloss für den Betrieb nützliche Informationen, sondern auch Steuerbehle (Sollwerte) erzeugen soll.

Die bisherige Prozessdatenerfassung beschränkt sich meistens darauf, die Zustände einer Maschine darzustellen und diese, wenn möglich mit den Eigenschaften des Produktes dieser Maschine zu korrelieren. Dies ergibt aber höchstens ein partielles Bild der wahren Gründe für die genannten Eigenschaften und gegebenenfalls ein mehrdeutiges oder sogar verzerrtes Bild.

Die dem Prozessleitrechner zuzuordnenden Funktionen (die nachfolgend näher erläutert werden) erfordern eine weiterentwickelte Sensorik, die aber wahrscheinlich zum Teil wegen der schon aufgeführten Risiken nicht zum Steuern der Maschinenabläufe zur Anwendung kommt, sondern nur für die Zwecke der Prozessführung vorgesehen ist. Dies bedeutet, dass die zukünftigen Spinnereimaschinen mit Sensoren zwei verschiedener Typen ausgerüstet werden sollte
- diejenigen Sensoren, die zum Steuern der Maschinenabläufe notwendig sind (prozesswesentliche Sensoren), und
- diejenigen Sensoren, die zur Gewinnung von Daten für Prozessführungszwecke vorgesehen sind (prozessredundante Sensoren).

Ein voll ausgebautes Prozessleitsystem ermöglicht dann
- einerseits die Korrelation der Produktionsresultate der verschiedenen Produktionseinheiten (Spinnstellen, Spulstellen, Streckenkopf, Kämmkopf, Karde usw.) mit deren Umgebungen,
- andererseits die Hochrechnung der erzielten Resultate, um das Disponieren der weiteren Abläufe nach den vom Anwender gestellten Anforderungen zu "optimieren" (zumindest in dem Sinn, dass Mindestanforderungen erfüllt werden oder eine Vorwarnung der Unerfüllbarkeit der gestellten Anforderungen gegeben wird).

Diese Erfindung befasst sich mit der Korrelation mit der Umgebung. Die "Umgebung" einer "Produktionseinheit" schliesst alle messbaren Faktoren ein, die einen erkennbaren Einfluss auf die Produktionsresultate dieser Einheit ausüben kann. Solche Faktoren umfassen:
- der Zustand der Einheit selbst und der sie direkt zugeordneten "Dienstleistungen" (Antriebselemente, Steuerungen, Energiezufuhr, Führungselemente usw.)
- Umweltsfaktoren, insbesondere Klimafaktoren. Diese können sowohl Mikroumweltsfaktoren (in der unmittelbaren Umgebung der betroffenen Einheit) wie auch Makroumweltsfaktoren, die eine Mehrzahl von Einheiten (oder sogar Maschinen) beeinflussen.

### Sensorik für die Produktionsresultate:

Qualitätssensoren sind in unserer europäischen Patentanmeldung Nr. 41 04 29 für verschiedene Anforderungen aufgeführt.

"Quantitätssensoren" umfassen z.B. Signalgeber, welche die Prozesseinstellungen der betreffenden Maschine angeben (z.B. Spindeltouren, Lieferung usw.) und auch Sensoren, die feststellen, ob eine gegebene Produktionseinheit effektiv produziert oder nicht.

### Sensorik zur Korrelation mit der Umgebung:

Wichtig in dieser Kategorie ist die Materialflussverfolgung, welche die Korrelation der Werte von verketteten Produktionseinheiten ermöglicht. Lösungen sind z.B. aus unserer PCT Anmeldung Nr. PCT/CH/91/00151 vom 19.07.1991 sowie (zum Teil) aus DOS 3603002 bzw. DOS 4112073 bekannt.

Sensoren, welche die Zustände der Maschinenelemente feststellen, umfassen z.B. unter anderem Vibrationssensoren und Energieaufnahmesensoren. Diese Kategorie umfasst auch Sicherheitssensoren wie z.B. Temperaturmessfühler z.B. nach DOS 4011944. Die Sicherheitsaufgabe ist primär auf der Maschinenebene zu lösen - die Sicherheitsdaten sind aber ebenfalls für das Prozessleitsystem von Bedeutung, da das System zum feststellen von den Ursachen für Risiken dadurch ausgelegt werden kann, dass eine Korrelationsanalyse mit anderen vorhandenen Sensorensignale durchgeführt wird.

Die (Makro-, Mikro-) Umwelteinflüsse können durch Klimasensoren z.B. für den ganzen Saal und/oder in der Nähe einer gegebenen Produktionseinheit gemessen werden. Die zutreffenden Grössen sind z.B. Temperatur, Partikel- bzw. Flugbelastung der Luft, Luftfeuchtigkeit oder sogar Luftströmungsrichtung und/oder Geschwindigkeit. Die Makroumweltfaktoren können z.B. durch die Sensorik einer Klimaanlage z.B. Sensor 424, Fig. 3 festgestellt werden. Die Mikroumweltfaktoren müssen im "eigenen Raum" der zutreffenden Produktionseinheit festgestellt werden z.B. durch Anbringung der entsprechenden Sensorik in der Maschine selbst, in einer dieser Maschine anfahrbaren Bedienungseinrichtung z.B. Sensor 440, Fig. 3 oder durch das Bedienungspersonal. Im letzteren Fall müssen die Messwerte vom Personal derart in einer Kommunikationsvorrichtung eingegeben werden, dass sie davon über dem Kommunikationssystem an den Prozessleitrechner weitergeleitet werden können.

### Korrelationsfunktion:

Die (prozessredundante) Sensorik nun vorgeschlagen ermöglicht eine "tiefergehende" Untersuchung der Ursachen für festgestellte Resultate (Leistungsdaten). Dies ist besonders für die Schätzung der Gründe für Störungen wichtig. Produktionsausfälle können z.B. durch die folgenden Ursachen ausgelöst werden:
- Klimaänderungen (Makro- oder Mikro-)
- Materialfehler
- Maschinenfehler (Vibrationen, Verschleiss)
- fehlende Dienstleistungen (Energiezufuhr, Ausfall eines Bedienungsautomaten)
- fehlendes Personal
- Unfälle

Die Korrelation der Resultate einer Maschine, mit denen von anderen Maschinen, kann hier zu wichtigen Schlüssen führen.

### Klimasensorik

Die Erfahrung zeigt nun, dass der Spinnprozess sehr empfindlich auf "Klimawerte" reagiert. Diese Aussage gilt sowohl für den Spinnsaal als ganzes (Makroklima) als auch für die nähere Umgebung einer einzigen Spinnstelle (Mikroklima). Die Klimawerte des ganzen Saales werden normalerweise von der Klimaanlage zentral gesteuert bzw. geregelt (siehe Rechner 418, Fig.3) und können nur beschränkt an die Maschinen als Individuen angepasst werden.

Die wahren Ursachen für Leistungsänderungen einer gegebenen Maschine können aber in "klimatischen" Aenderungen in der unmittelbaren Nähe dieser Maschine liegen, die im Durchschnittswert der zentralen Klimaanlage nicht feststellbar sind. Das Abschalten einer Nachbarmaschine kann z.B. für eine gewisse Periode zu einer merklichen örtlichen Temperaturänderung in der Umgebung der Nachbarmaschine(n) führen. Diese örtliche Temperaturänderung wirkt sich erst viel später und in einer abgeschwächten Grössenordnung auf die Zentrale aus, hat aber in der Zwischenzeit möglicherweise zu einer Aenderung des Laufverhaltens in einer betroffenen Maschine geführt, welche sich sowohl bei der ersten Aenderung als auch bei nachfolgender Rückkehr zu "Normalbedingungen" sich ungünstig auswirkt.

Es ist daher jetzt vorgesehen, die Maschine selbst mit einer "Klimasensorik" zu versehen, zumindest
- für diejenigen Maschinen (z.B. Endspinnmaschinen), welche von ihrer Umgebung kaum abgeschirmt werden können und durch das Klima ihrer Umgebung merklich beeinflusst werden, und
- zumindest für diejenigen Klimawerte, die einen merklichen Einfluss auf das Laufverhalten in der Maschine ausüben (Temperatur und/oder Luftfeuchtigkeit).

Das Feststellen eindeutiger "Klimawerte" für eine Längsteilmaschine erzeugt die eigenen Probleme. In einer Ringspinnmaschine z.B. können die Klimawerte mindestens an drei Stellen des Spinnprozesses einen Einfluss ausüben, nämlich
- im Vorlagematerialpuffer (im Gatter, auch Aufsteckung genannt),
- am Spinndreieck (am Lieferzylinder), und
- an der Ring/Läufer-Einheit.

Es muss dabei berücksichtigt werden, dass die Klimawerte sich auch über die Maschinenlänge merklich verändern können, was Unterschiede der Leistung von Spinnstelle zu Spinnstelle erklären kann.

Es ist heutzutage kaum denkbar, jede Spinnstelle mit eigener Klimasensorik auszurüsten. Es wäre aber möglich, die Maschine mit einer "Laufkatze" zu versehen, welche mit der notwendigen Klimasensorik ausgerüstet ist und der Maschine entlang zumindest in einem der vorerwähnten Bereiche auf eine geeignete Führung bewegt werden kann. Es könnten z.B. drei solche Laufkatzen vorgesehen werden, die je einen Bereich (Gatter, Lieferzylinder, Ringbank) abtasten und ihre Werte an die Maschinensteuerung übermitteln.

Ein fahrbares Bedienungsgerät könnte aber den gleichen Zweck erfüllen, wobei dieses Gerät entweder speziell für die Erfassung von Klimwerten gestaltet ist oder diese Funktion zusätzlich zu einer anderen Funktion (z.B. Gatterbeschickung oder Fadenansetzen) übernimmt. Es könnte z.B. ein fahrbares Gerät vorgesehen werden, welches zur detaillierten Untersuchung vom Mikroklima einer einzelnen Spinnstelle vorgesehen ist, wenn sonst keine Erklärung für Abweichungen von den Normwerten für diese Spinnstellen feststellbar sind. Ein solches Gerät könnte einer bestimmten Maschine interimistisch zugeordnet und sonst zum Fahren zwischen den Maschinen angeordet werden. Ein solcher Gerät könnte z.B. insbesondere örtliche Luftströmungen oder Staubbelastungen feststellen, die den Spinnprozess an der betroffenen Stelle stören.

### Zustandssensorik für die Aktorikelemente

Diese Sensorik soll feststellen, ob die Arbeitsabläufe der Maschine nicht durch die Auswirkung eines Unfalles (Missgeschicks) oder wegen Verschleiss an den Maschinenteilen beeinträchtigt sind. Die Sensorik kann kaum auf jede mögliche Fehlerquelle einzel abgerichtet sein, muss sich daher auf Indizien abstützen. Solche Indizien sind:
- die erforderliche Energie, um vorgegebene Resultate zu erzielen, bzw. die Energiezufuhr an die einzelnen Aktorikelemente der Maschine,
- Schwingungen bzw. Vibrationen (inkl. Lärmemissionen) an vorbestimmten Stellen.

Jede Maschine kann ohne weiteres mit Sensoren versehen werden, welche die Gesamtenergiezufuhr an die Maschine messen bzw. die Gesamtzufuhr für die verschiedenen Energieträger (Strom, Druckluft usw.) einzeln messen.

Es kann aber zusätzlich z.B. den Stromzufuhr an einzelne Motoren der Maschinenaktorik gemessen werden, und zwar bei verschiedenen Betriebsbedingungen z.B. Leerlauf, Volllast oder sogar periodisch unter speziell dafür vorgesehenen Testbedingungen ("Selbsttest"). Nach einer Analog/Digital Umwandlung können die entsprechenden Werte auch an den Prozessleitrechner weitergeleitet werden. Diese Messungen sind ohne weiteres möglich, wo frequenzgesteuerte Motoren über Umrichter gespeist werden.

Es können an vorbestimmten Stellen akustische Sensoren bzw. auf mechanische Vibrationen ansprechende Sensoren (z.B. Piezo-Elemente) vorgesehen werden. Diese Sensoren könnten aber auch an "Laufkatzen" (wie die schon erwähnte Klimasensorik) vorgesehen werden.

### Personalplan, Bedienungseingriffe

In Bezug auf Personal kann nur eine "Sensorik" vorgesehen werden, welche auf Eingaben vom Personal selbst reagiert. Diese "Eingaben" können z.B. absichtlich (z.B. über eine Tastatur) oder als Nebenerscheinung einer vorgegebenen Handlung getätigt werden.

Ein wesentlicher Aspekt der Dispisitionsfunktion des Leitrechners ist die Abschätzung der Verfügbarkeit des Personals. Es hat z.B. meistens keinen Sinn im heutigen Europa einen Sortimentswechsel, (welcher bedienungsintensiv ist) um 02.00 Uhr morgens oder am Samstagnachmittag einzuplanen. Es hat genausowenig Sinn, ein Sortimentswechsel gerade bevor einem Schichtwechsel einzuplanen.

Der Leitrechner bzw. seine Software muss dementsprechend mit einem "Kalender" versehen werden, welcher die wahrscheinliche Verfügbarkeit des Bedienungspersonals über einen vorgegebenen Zeitraum darstellt.

### Anwendung eines Leitsystems nach dieser Erfindung

Es sind hier nur einige Beispiele der Anwendung des Systems aufgeführt.

Ein wichtiger Aspekt eines Leitsystems ist die Vermeidung oder die Behandlung von "Problemen" in der Herstellung
- a) der gewünschten Qualität,
- b) der (realistisch) zu erwartenden Menge

Dazu sollen kritische Grössen überwacht und mit voraussehbaren potentiellen Problemursachen korreliert werden.

Eine kritische Grösse der Qualität einer Spinnmaschine ist die Anzahl Fadenbrüche. Die Bedeutung dieser Grösse geht weit ausserhalb der Bedeutung der einzelnen Ansetzer, die wegen der heutigen hochentwickelten Ansetztechnologie an und für sich keine besonderen Probleme hervorrufen. Eine (relativ) hohe Anzahl Fadenbrüche ist ein klares Zeichen von (relativ) schlechtem Garn (siehe den Artikel "Auswirkungen von Fadenbrüchen beim Ring- und OE-Rotorspinnen auf die Garneigenschaften und das Laufverhalten in Webereivorbereitung und Weberei" von S. Schlichter und
Prof.Dr.J.Lünenschloss, Vortrag an der Dornbirn Chemiefasertagung, 25 bis 27. September 1985).

Eine kritische Grösse der "Mengenkapazität" einer Spinnmaschine ist ihr "Nutzeffekt" (auch "Wirkungsgrad" genannt). Es sind verschiedene Definitionen dieser Grösse verwendet. Im Grossen und Ganzen geht es darum, die erzielte Produktion (Ist-Wert) mit einer realistischen Schätzung der erzielbaren Produktion (Soll-Wert) zu vergleichen.

### Datenerfassung:

Wie schon angedeutet, hat ein Leitsystem eine Datenerfassungsfunktion zu erfüllen. Hier geht es darum, einen "Ueberblick zu schaffen", womöglich durch "Visualisierung" der Daten. Das heute dazu geeigneteste Mittel ist die Bildschirmgraphik. Die Skizzen der Fig. 5 zeigen (als Beispiele der möglichen Darstellungen) für eine bestimmte Maschine:
- Fig.5A -: die Verteilung der Fadenbruchhäufigkeit über die Maschinenlänge für einen gegebenen Zeitraum (oder Artikel oder Satz von Maschineneinstellungen oder..),
- Fig.5B -: der Verlauf der Fadenbruchwertigkeit (Fadenbrüche pro 1000 Spinnstunden) über Zeit für zwei verschiedene Artikel X und Y,
- Fig.5C -: der Verlauf des Nutzeffektes (Wirkungsgrades) der Maschine über mehrere Schichtwechsel hinweg,
- Fig.5D -: der Verlauf der Fadenbruchhäufigkeit über den Packungsaufbau (-länge).

### Diagnostik:

Um den Prozess zu leiten, muss der Prozessleitrechner auch als Diagnosegerät arbeiten, um die Ursachen für Abweichungen von den erwarteten Resultaten (Sollwerte) feststellen zu können. Das geeigneteste Mittel zu diesem Zweck ist die Korrelationsanalyse.

Sowohl die Fadenbruchhäufigkeit wie auch der Nutzeffekt für eine gegebene Maschine sind vorzugsweise mit den folgenden Grössen zu korrelieren:
- Klimawerte
- Maschineneinstellungen
- Schichtwechsel
- Artikeltyp
- entsprechenden Werte anderer Maschinen des gleichen Types
- entsprechenden Werte anderer mit der betroffenen Maschine verketteten Maschinen.

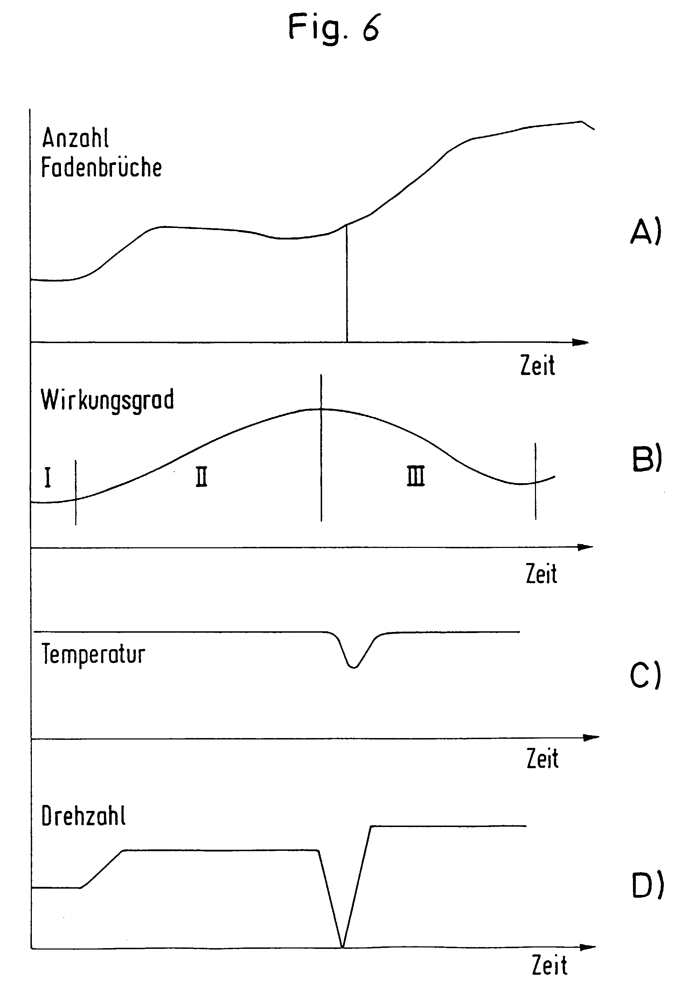

Die einfachste Korrelationsmethodik liegt darin, die Werte zu speichern und sie bei Bedarf für das Personal zu "Visualisieren". Zu diesem Zweck sollen zumindest zwei und vorzugsweise mehrere Darstellungen nebeneinander angeordnet werden, wie dies als Beispiel in Fig. 6 gezeigt ist. Die Skizze der Fig. 6A zeigt den Fadenbruchwertigkeitsverlauf und Fig. 6B den Nutzeffektverlauf, die auch in Fig. 5 gezeigt wurden. Die Darstellung nach Fig. 6 enthält aber auch in Fig. 6C (für die gleiche Zeitperiode) den Verlauf der "Klimawerte" (Auswahl: Temperatur, Luftfeuchtigkeit usw.) und in Fig. 6D den entsprechenden Verlauf der Maschineneinstellungen (Auswahl: z.B. Verzug, Drehzahl).

Falls die Platzverhältnisse auf dem Bildschirm das Nebeneinanderstellen von mehr als zwei Verläufe nicht zulässt, können zwei Grössen nebeneinander gestellt werden, wobei die eine Grösse ein kritischer Qualitäts- oder Mengenparameter darstellt (z.B. Fadenbruchrate oder Nutzeffekt) und die zweite Grösse ein wichtiger Einflussfaktor darstellt. Die entsprechenden Werte können der Reihe nach aus den jeweiligen Speichern geholt werden, so dass die verschiedenen Korrelationen (bzw. das Fehlen einer Korrelation) sequentiell visualisiert werden können.

Die Anlage kann derart angeordnet werden, dass die Visualisierung der Korrelationen für eine gegebene Maschine auf der Bedienungsoberfläche dieser Maschine erfolgen kann. Diese Möglichkeiten werden aber hier (aus Platzgründen) -Bildschirmgrösse beschränkt sein. Es kann daher in der Zentrale eine geeignete Anzeige vorgesehen werden, welche eine tiefergehende Analyse auf einer breiteren Basis durch Visualisierung ermöglicht.

Das gleiche Prinzip kann zur Anwendung kommen, wenn die Werte von verschiedenen Maschinen miteinander verglichen werden sollen. Es könnte z.B. ohne weiteres die Werte für zwei Nachbarmaschinen des gleichen Types nebeneinander abgebildet werden. Wo aber viele Maschinen des gleichen Types in der Anlage vorhanden sind (siehe z.B. der Ringspinnsaal, Fig.1), wird es schwierig sein, alle Werte auf diese Art miteinander zu vergleichen.

In einem solchen Fall können Durchschnittswerte für die geleiteten Maschinengruppen abgeleitet werden, oder es können die statistische Verteilung der Werte abgeleitet, und die "Position" einer bestimmten Maschine in dieser Verteilung analysiert werden.

### Erzeugen von Steuerbefehlen:

Es gibt grundsätzlich zwei Arten von Steuerbefehlen
- diejenige, die ohne Eingriff des Bedienungspersonals ausgeführt werden können, und
- diejenige, die nur durch über solche Eingriffe ausgeführt werden können.

Die effektiven Möglichkeiten in einem gegebenen Fall hängen vom Maschinentyp ab und zwar davon, ob die Aktorik der Maschine automatisch steuerbar ist, oder nicht. In einer modernen Ringspinnmaschine wird zumindest die Drehzahl eines Hauptantriebsmotors automatisch steuerbar sein, der Verzug bzw. der Wechsel des Läufertypes hingegen nicht.

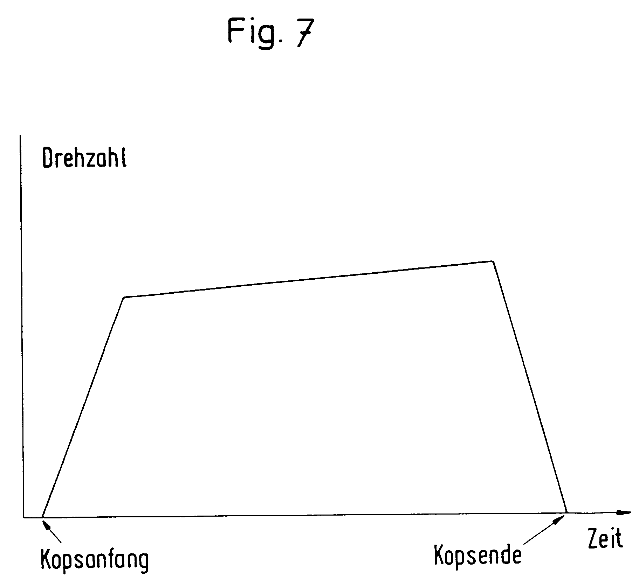

Sofern die Maschineneinstellungen automatisch steuerbar sind, kann der Leitrechner diese Einstellungen durch an die Maschinensteuerung(en) abgegebenen Sollwerte beeinflussen und an die Umgebungsänderungen anpassen. Wenn z.B. eine Analyse nach Fig. 6D ergibt, dass die Anzahl Fadenbrüche in der Anfahrphase (Teil A) des Kopsaufbaues die realistisch erwarteten (empirisch über Zeit) ermittelten Werte übersteigt, kann die "Drehzahlkurve" (Fig.7) der Maschine angepasst werden, um die Anzahl Fadenbrüche in dieser Phase wieder zu senken. Diese Kurve definiert die Sollwerte für die Drehzahl des Hauptantriebmotors (oder der einzelnen Spindelmotoren) über den Kopsaufbau. (siehe z.B. EP-A-512442 - vgl. DOS 4015638).

Wenn hingegen an der Spulmaschine festgestellt wird, dass die Garnhaarigkeit der eingestellten Werte nicht genügt, (Läuferwechsel angezeigt) oder dass die Garnnummer sogar falsch ist (Verzugsänderung angezeigt), kann der Leitrechner eine Instruktion über das Netzwerk 350 an die betroffene Maschine senden, wobei diese Instruktion auf der Bedienungsoberfläche der Maschine angezeigt werden muss. Falls die Anpassung der Betriebsbedingungen dringend notwendig ist, muss der Leitrechner gleichzeitig ein Warnruf (z.B. nach PCT Patentanmeldung Nr. WO91/16481) an das zutreffende Personal senden, um die geeigneteste Person auf die Notwendigkeit/Art der erforderlichen Neueinstellung aufmerksam zu machen (Alarmsystem).

Auf keinen Fall kann der Prozessleitrechner direkt in die Arbeitsabläufe des Prozesses eingreifen - dies bleibt den Maschinensteuerungen bewahrt. Der Einfluss des Leitrechners ist ein mittelbarer Einfluss über Sollwerte bzw. Bedienungsunterstützung.

### Abspeichern / Abruf von Rohdaten

Es ist praktisch nicht möglich, gleichzeitig alle der erwähnten Analysen durchzuführen, anzuzeigen und in Aenderungen in den Maschinenabläufen umzuwandeln. Die an den Prozessleitrechner gelieferten Rohdaten müssen dementsprechend gespeichert werden (Datenbanken) und bei Bedarf wieder aus dem Speicher abrufbar sein. Dabei können gewisse kritische Analysen (quasi) kontinuierlich durchgeführt werden - andere hingegen erst, wenn die kontinuierlichen Analysen eine Abweichung zwischen einem festgestellten Maschinenzustand und einer für diese Maschine vorgesehenen Zustand (Sollzustand) ermitteln.

## Patentansprüche

1. Spinnereianlage mit einem Prozessleitrechner (340) für mindestens eine Maschinengruppe der Anlage, wobei die Maschine bzw. jede Maschine der genannten Gruppe mit einer eigenen Maschinensteuerung (390) versehen ist, welche die Aktorik (434,436,ANTRIEB) der Maschine samt allfälliger dieser Maschine zugeordneten Hilfsaggregate steuert, und wobei die Anlage mit einem Netzwerk (350) für die bidirektionale Kommunikation zwischen dem Rechner (340) und jeder Maschine der Gruppe versehen ist und wobei die Maschine bzw. zumindest eine Maschine der Gruppe sowohl mit prozesswesentlichen (397,438,440,442,SENSOR) wie auch mit prozessredundanten (424,426,428) Sensoren versehen ist,
dadurch gekennzeichnet, dass
der Prozessleitrechner (340) mit Software versehen ist, die aus den Rohdaten der genannten Sensoren zumindest eine erste Grösse (Fig.6) feststellen bzw. ableiten kann, die als Indiz für die Leistung der Maschine dienen kann, wobei die Software dazu angeordnet ist, diese Grösse als Funktion der Zeit bzw. eines Maschinenparameters auf einer geeigneten Anzeige abzubilden und gleichzeitig neben dieser Abbildung den Verlauf einer weiteren Grösse (Fig.6) als eine Funktion der Zeit bzw. des gleichen Maschinenparameters abzubilden, wobei diese weitere Grösse einem Faktor entspricht, welcher einen Einfluss auf den Verlauf der Maschinenleistung ausüben kann.

2. Anlage nach Anspruch 1, dadurch gekennzeichnet, dass die Grösse, die als Indiz für die Leistung der Maschine dient, die Anzahl Fadenbrüche oder ein Nutzeffekt oder eine aus der Fadenbruchanzahl bzw. aus dem Nutzeffekt abgeleitete Grösse ist.

3. Anlage nach Anspruch 1 oder 2, dadurch gekennzeichnet, dass der Prozeßleitrechner (340) mit Software versehen ist, um die Rohdaten zu speichern, allfällige Korrelationen zwischen den gespeicherten Rohdaten der Sensoren von vorbestimmten Sensorenkombinationen zu ermitteln, Steuerbefehle in Abhangigkeit von ermittelten Korrelationen zu erzeugen und diese Steuerbefehle über das Netzwerk (350) an die Maschinensteuerung (390) zu senden, wofür die Korrelationen ermittelt wurden.

4. Anlage nach Anspruch 3, dadurch gekennzeichnet, dass die Software des Leitrechners (340) derart ausgelegt ist, dass die Korrelationsanalyse zumindest dann durchgeführt wird, wenn das durch die Rohdaten vermittelte Abbild eines Maschinenzustandes von einem Sollzustand abweicht.

5. Anlage nach Anspruch 3 oder 4, dadurch gekennzeichnet, dass die prozessredundanten Sensoren zumindest einen Sensor (424) umfassen, welcher auf Klimawerte in der Umgebung der Maschine anspricht.

6. Anlage nach Anspruch 3,4 oder 5, dadurch gekennzeichnet, dass die prozessredundanten Sensoren zumindest einen Sensor umfassen, der auf die Energiezufuhr an die Maschine bzw. an ein Aktorikelement der Maschine anspricht.

7. Anlage nach einem der vorangehenden Ansprüchen 3,4,5 oder 6, dadurch gekennzeichnet, dass die prozessredundanten Sensoren zumindest einen Sensor umfassen, der auf Vibrationen bzw. Lärmemissionen in der Maschine anspricht.

8. Anlage nach einem der vorangehenden Ansprüche 3 bis 7, dadurch gekennzeichnet, dass ein Steuerbefehl die Maschinensteuerung (390) dazu anregt, eine Instruktion an der Bedienungsoberfläche der Maschine anzuzeigen.

9. Anlage nach einem der vorangehenden Ansprüche 3 bis 8, dadurch gekennzeichnet, dass die Maschinensteuerung (390) mit Software versehen ist, welche anhand der Ausgangssignale von mit dieser Steuerung direkt oder indirekt verbundenen Sensoren ein Abbild des Maschinenzustandes erstellt und die Steuerbefehle des Prozessleitrechners (340) anhand des letztgenannten Abbildes auf ihre Plausibilität prüfen.

10. Anlage nach einem der vorangehenden Ansprüche, dadurch gekennzeichnet, dass die Rohdaten sowohl der prozesswesentlichen wie auch der prozessredundanten Sensoren an die Maschinensteuerung (390) geliefert werden und da auf die Uebertragung an den Prozeßleitrechner aufbereitet werden.

## Claims

1. A spinning installation with a process control computer (340) for at least one group of machines of the installation, with the machine or each machine of the said group being provided with a separate machine control unit (390) which controls the actuator system (434, 436, DRIVE) of the machine including any auxiliary units associated with said machine and with the installation being provided with a network (350) for the bidirectional communication between the computer (340) and each machine of the group and with the machine or at least one machine of the group being provided both with process-relevant sensors (397, 438, 440, 442, SENSOR) as well as with process-redundant sensors (424,426, 428), characterized in that the process control computer (340) is provided with software which can determine or derive at least one first value (Fig. 6) from the raw data of said sensors which can be used as an indicator for the performance of the machine, with the software being arranged in such a way as to display said value as a function of time or a machine parameter on a suitable display and to display simultaneously next to said representation the course of a further value (Fig. 6) as a function of time or of the machine parameter, with said further value corresponding to a factor which can exercise an influence on the course of the machine's performance.

2. An installation as claimed in claim 1, characterized in that the value which is used as an indicator for the performance of the machine is the number of yarn breakages or an efficiency or a value derived from the number of yarn breakages or from the efficiency.

3. An installation as claimed in claim 1 or 2, characterized in that the process control computer (340) is provided with software in order to store the raw data, to determine any correlations between the stored raw data of the sensors of predetermined combinations of sensors, to produce control commands depending on the determined correlations and to send said control commands through the network (350) to the machine control unit (390), for which the correlations were determined.

4. An installation as claimed in claim 3, characterized in that the software of the process control computer (340) is arranged in such a way that the correlation analysis is carried out at least when the image of a machine condition as imparted by the raw data deviates from a scheduled condition.

5. An installation as claimed in claim 3 or 4, characterized in that the process-redundant sensors comprise at least one sensor (424) which responds to the climatic values in the ambient environment of the machine.

6. An installation as claimed in claim 3, 4 or 5, characterized in that the process-redundant sensors comprise at least one sensor which responds to the energy supply to the machine or to an actuator element of the machine.

7. An installation as claimed in one of the preceding claims 3, 4, 5 or 6, characterized in that the process-redundant sensors comprise at least one sensor which responds to vibrations or noise emissions in the machine.

8. An installation as claimed in one of the preceding claims 3 to 7, characterized in that a control command makes the machine control unit (390) display an instruction on the user interface of the machine.

9. An installation as claimed in one of the preceding claims 3 to 8, characterized in that the machine control unit (390) is provided with software which produces an image of the machine's condition based on the output signals of the sensors which are connected with said control unit directly or indirectly and which checks the control commands of the process control computers (340) for plausibility based on the aforementioned image.

10. An installation as claimed in one of the preceding claims, characterized in that the raw data both of the process-redundant as well as process-relevant sensors are supplied to the machine control unit (390) and are prepared for the transmission to the process control computer.

## Revendications

1. Installation de filature possédant un ordinateur pilote de processus (340) pour au moins un groupe de machines de l'installation, et où la machine respectivement chaque machine dudit groupe est pourvue d'un asservissement individuel de machine (390) qui commande le mécanisme d'actionnement (434, 436, ENTRAINEMENT) de la machine, avec tous les appareils auxiliaires éventuels, adjoints à cette machine, et où l'installation est munie d'un réseau (350) pour la communication bidirectionnelle entre l'ordinateur (340) et chaque machine du groupe, et où la machine respectivement au moins une machine du groupe est pourvue de détecteurs essentiels de processus (397, 438, 440, 442, DETECTEUR), ainsi qu'également de détecteurs redondants de processus (424, 426, 428),
caractérisée par le fait que
l'ordinateur pilote de processus (340) est pourvu d'un logiciel qui. à partir des données brutes desdits détecteurs, peut déterminer respectivement dériver au moins une première grandeur (figure 6) qui peut servir d'indice pour la capacité de la machine, et où le logiciel est aménagé pour représenter, sur une indication appropriée, cette grandeur comme fonction du temps respectivement d'un paramètre de machine, et, à côté de cette visualisation, pour représenter simultanément l'allure d'une autre grandeur (figure 6) comme une fonction du temps respectivement du même paramètre de machine, et où cette autre grandeur correspond à un facteur qui peut exercer une influence sur le déroulement de la capacité de la machine.

2. Installation selon revendication 1,
caractérisée par le fait que
la grandeur, qui sert d'indice pour la capacité de la machine, est le nombre de casses de fil, ou un rendement, ou une grandeur dérivée du nombre de casses de fil respectivement du rendement.

3. Installation selon revendication 1 ou 2,
caractérisée par le fait que
l'ordinateur pilote de processus (340) est pourvu d'un logiciel, afin de mémoriser les données brutes, de détecter des corrélations éventuelles entre les données brutes mémorisées des détecteurs, depuis des combinaisons prédéterminées de détecteurs, d'engendrer des instructions de commande en fonction des corrélations détectées, et d'émettre, via le réseau (350), ces instructions de commande à l'asservissement de machine (390) pour lequel les corrélations ont été détectées.

4. Installation selon revendication 3,
caractérisée par le fait que
le logiciel de l'ordinateur pilote (340) est conçu de telle manière que l'analyse des corrélations est au moins réalisée dans le cas où l'image d'un état de machine, communiquée par les données brutes, s'écarte d'un état désiré.

5. Installation selon revendication 3 ou 4,
caractérisée par le fait que
les détecteurs redondants de processus comprennent au moins un détecteur (424) qui réagit aux valeurs climatiques dans l'environnement de la machine.

6. Installation selon revendication 3, 4 ou 5,
caractérisée par le fait que
les détecteurs redondants de processus comprennent au moins un détecteur qui réagit à l'alimentation en énergie de la machine, respectivement à un élément du mécanisme d'actionnement de la machine.

7. Installation selon une des revendications précédentes 3, 4, 5, ou 6,
caractérisée par le fait que
les détecteurs redondants de processus comprennent au moins un détecteur qui réagit à des vibrations respectivement à des émissions de bruits dans la machine.

8. Installation selon une des revendications précédentes 3 à 7,
caractérisée par le fait
qu'une instruction de commande incite l'asservissement de machine (390) à indiquer une instruction sur la surface de service de la machine.

9. Installation selon une des revendications précédentes 3 à 8,
caractérisée par le fait que
l'asservissement de machine (390) est pourvu d'un logiciel qui, à partir des signaux de sortie provenant de détecteurs reliés directement ou indirectement avec cet asservissement, réalise une image de l'état de la machine, et, à partir de l'image citée en dernier, contrôle, dans leur plausibilité, les instructions de commande de l'ordinateur pilote de processus (340).

10. Installation selon une des revendications précédentes,
caractérisée par le fait que
les données brutes, venant aussi bien des détecteurs essentiels de processus que des détecteurs redondants de processus, sont livrées à l'asservissement de machine (390), et y sont préparées pour la transmission vers l'ordinateur pilote de processus.
